# EUROPEAN PATENT APPLICATION

(11) **EP 4 366 451 A1**
(43) Date of publication of application: **08.05.2024**
(21) Application number: 23805841.6
(22) Date of filing: 15.09.2023
(51) Int. Cl.: H04W 76/20, H04W 76/19, H04W 76/30, H04W 8/02, H04W 80/10, G06N 3/02

(54) **ELECTRONIC DEVICE AND METHOD FOR PROVIDING SESSION AND SERVICE CONTINUITY**

(30) Priority: 18.09.2022 KR 20220117522
(71) Applicant: Samsung Electronics Co., Ltd., Suwon-si, Gyeonggi-do 16677 (KR)
(72) Inventor: KIM, Bokkeun, Suwon-si, Gyeonggi-do 16677 (KR); LEE, Heonhyung, Suwon-si, Gyeonggi-do 16677 (KR); JEONG, Hyeongyo, Suwon-si, Gyeonggi-do 16677 (KR); PARK, Jaehyun, Suwon-si, Gyeonggi-do 16677 (KR); CHOI, Jaehyuk, Suwon-si, Gyeonggi-do 16677 (KR)
(74) Representative: Gulde & Partner
(86) International application number: PCT/KR2023/014001
(87) International publication number: WO 2024/058628

(57) **Abstract**

In embodiments, a session management device includes at least one transceiver, and at least one processor coupled to the at least one transceiver. The at least one processor is configured to obtain prediction information for a residence time of a user equipment (UE) per a service area of each user plane function (UPF), based on mobility information of the UE. The at least one processor is configured to identify a packet data unit (PDU) session anchor (PSA) UPF for the UE based on the prediction information. The at least one processor is configured to, based on identifying an event according to a movement of the UE, identify whether a UPF corresponding to the service area in which the UE is located is the PSA UPF for the UE. The at least one processor is configured to, based on identifying that the UPF is the PSA UPF for the UE, perform a PSA change to the UPF.

## Description

### [Technical Field]

The following descriptions relate to an electronic device and a method for providing session and service continuity.

### [Background Art]

In a 5^{th} generation (5G) core network, mobile edge computing (MEC) technology may transmit or receive a data packet for a terminal (e.g., user equipment (UE)) to or from an edge cloud through a user plane function (UPF). 3rd Generation Partnership Project (3GPP) and European Telecommunications Standards Institute (ETSI) provide a technique for reselecting a packet data unit (PDU) session anchor (PSA) UPF adjacent to a location to which a UE moves. Current reselecting schemes are known to produce significant signaling traffic and may negatively influence the service quality.

### [Disclosure]

### [Technical Solution]

In embodiments, a method performed by a session management device, comprises obtaining prediction information for a residence time of a user equipment (UE) per a service area of each user plane function (UPF), based on mobility information of the UE. The method comprises identifying a packet data unit (PDU) session anchor (PSA) UPF for the UE based on the prediction information. The method comprises, based on identifying an event according to a movement of the UE, identifying whether a UPF corresponding to the service area in which the UE is located is the PSA UPF for the UE. The method comprises, based on identifying that the UPF is the PSA UPF for the UE, performing a PSA change to the UPF.

In embodiments, a device of a session management device, comprises at least one transceiver, and at least one processor coupled to the at least one transceiver. The at least one processor is configured to obtain prediction information for a residence time of a user equipment (UE) per a service area of each user plane function (UPF), based on mobility information of the UE. The at least one processor is configured to identify a packet data unit (PDU) session anchor (PSA) UPF for the UE based on the prediction information. The at least one processor is configured to, based on identifying an event according to a movement of the UE, identify whether a UPF corresponding to the service area in which the UE is located is the PSA UPF for the UE. The at least one processor is configured to, based on identifying that the UPF is the PSA UPF for the UE, perform a PSA change to the UPF.

In embodiments, a non-transitory computer-readable medium is provided. The non-transitory computer-readable medium is provisioned with program instructions that, when executed by one or more processors, cause a session management function , SMF, to perform functions comprising obtaining prediction information for a residence time of a user equipment, UE, per a service area of each user plane function, UPF, based on mobility information of the UE, identifying a packet data unit, PDU, session anchor, PSA, UPF for the UE based on the prediction information of the UE, based on identifying an event according to a movement of the UE, identifying whether a UPF corresponding to the service area in which the UE is located is the PSA UPF for the UE, based on identifying that the UPF is the PSA UPF for the UE, performing a PSA change to the UPF.

### [Description of the Drawings]

FIG. 1A illustrates an example of a session and service continuity (SSC) mode 2 according to an embodiment.
FIG. 1B illustrates an example of SSC mode 3 according to an embodiment.
FIG. 2A illustrates an example of a 5^{th} generation (5G) core network according to an embodiment.
FIG. 2B illustrates an example of a service request procedure according to an embodiment.
FIG. 3 illustrates movement of a terminal between service areas of a user plane function (UPF) according to an embodiment.
FIG. 4 illustrates learning about a service area of a UPF according to an embodiment.
FIG. 5 illustrates an example of a machine learning model according to an embodiment.
FIG. 6 illustrates an example of UPF reselection in a boundary area of a service area according to an embodiment.
FIG. 7 illustrates an example of UPF selection according to high-speed movement of a terminal according to an embodiment.
FIG. 8 illustrates an example of an area of validity according to an embodiment.
FIGS. 9A and 9B illustrate examples of performance of UPF reselection using machine learning according to an embodiment.
FIG. 10A illustrates an operation flow of a session management device for UPF reselection according to embodiments.
FIG. 10B illustrates signaling between entities for configuring a validity area according to embodiments.
FIG. 11 illustrates a functional configuration of a session management device according to embodiments.

### [Mode for Invention]

Terms used in the present disclosure are used only to describe a specific embodiment, and may not be intended to limit the scope of another embodiment. A singular expression may include a plural expression unless it is clearly meant differently in the context. The terms used herein, including a technical or scientific term, may have the same meaning as generally understood by a person having ordinary knowledge in the technical field described in the present disclosure. Terms defined in a general dictionary among the terms used in the present disclosure may be interpreted with the same or similar meaning as a contextual meaning of related technology, and unless clearly defined in the present disclosure, it is not interpreted in an ideal or excessively formal meaning. In some cases, even terms defined in the present disclosure cannot be interpreted to exclude embodiments of the present disclosure.

In various embodiments of the present disclosure described below, a hardware approach is described as an example. However, since the various embodiments of the present disclosure include technology that use both hardware and software, the various embodiments of the present disclosure do not exclude a software-based approach.

A term that refer to a signal (e.g., signal, information, message, signaling), a term that refer to an area (e.g., service area, serving area, zone, tracking area, predicted tracking area), a term that refer to a data type (e.g., list, set, array, information), a term for an operational state (e.g., step, operation, procedure), a term that refer to data (e.g., packet, user stream, information, bit, symbol, codeword), a term that refer to a channel, a term that refer to network entities, a term that refer to a component of a device, and the like used in the following description are illustrated for convenience of description. Accordingly, the present disclosure is not limited to terms described below, and another term having an equivalent technical meaning may be used.

In addition, in the present disclosure, in order to determine whether a specific condition is satisfied or fulfilled, an expression of more than or less than may be used, but this is only a description for expressing an example, and does not exclude description of more than or equal to or less than or equal to. A condition described as 'more than or equal to' may be replaced with ' more than', a condition described as 'less than or equal to' may be replaced with 'less than', and a condition described as 'more than or equal to and less than' may be replaced with 'more than and less than or equal to'. In addition, hereinafter, 'A' to 'B' means at least one of elements from A (including A) and to B (including B).

The present disclosure describes various embodiments by using terms used in some communication standards (e.g., 3rd Generation Partnership Project (3GPP), European Telecommunications Standards Institute (ETSI), extensible radio access network (xRAN), and open-radio access network (O-RAN), but this is only an example for description. Various embodiments of the present disclosure may be easily modified and applied to other communication systems as well.

Embodiments of the present disclosure propose a technique for providing session and service continuity (SSC) by selecting a user plane function (UPF). Through support for the SSC in 5G system architecture, various continuity requirements of various applications/services for user equipment (UE) may be solved. The 3GPP may support various SSC modes. The SSC mode associated with a PDU session is not changed during the lifecycle of the PDU session.
1) SSC mode 1: The network maintains the connection service provided to the UE. In case of the PDU session of IPv4 or IPv6 or IPv4v6 type, the IP address is maintained. In case of the PDU session in the SSC mode 1, the UPF serving as a PDU session anchor when setting up the PDU session, is maintained regardless of the access technology (e.g., access type and cell) that the UE continuously uses to access the network.
2) SSC Mode 2: The network may release the connection service delivered to the UE and may release the corresponding PDU session(s). In case of IPv4 or IPv6 or IPv4v6 types, the release of the PDU session induces the release of the IP address assigned to the UE. In case that there is a single PDU session anchor in the PDU session in the SSC mode 2, the network may trigger the release of the PDU session and may instruct the UE to immediately set a new PDU session for the same data network. The trigger condition differs according to the operator policy (e.g., application function (AF) request, load status, and the like). When setting up the new PDU session, a new UPF serving as the PDU session anchor may be selected.
3) SSC mode 3: While the network ensures that the UE does not suffer from connection loss, changes in the user plane can be visible to the UE. A connection through a new PDU session anchor point may be set before the previous connection is terminated to allow for better service continuity. In case of IPv4 or IPv6 or IPv4v6 types, the IP address is not maintained in this mode when the PDU session anchor is changed. In case of the PDU session in the SSC mode 3, the network allows UE connection setting through the new PDU session anchor to the same data network before the connection between the UE and the previous PDU session anchor is released. When the trigger condition is applied, the network determines whether to select a PDU session anchor UPF suitable for the new condition of the UE (e.g., network connection point).

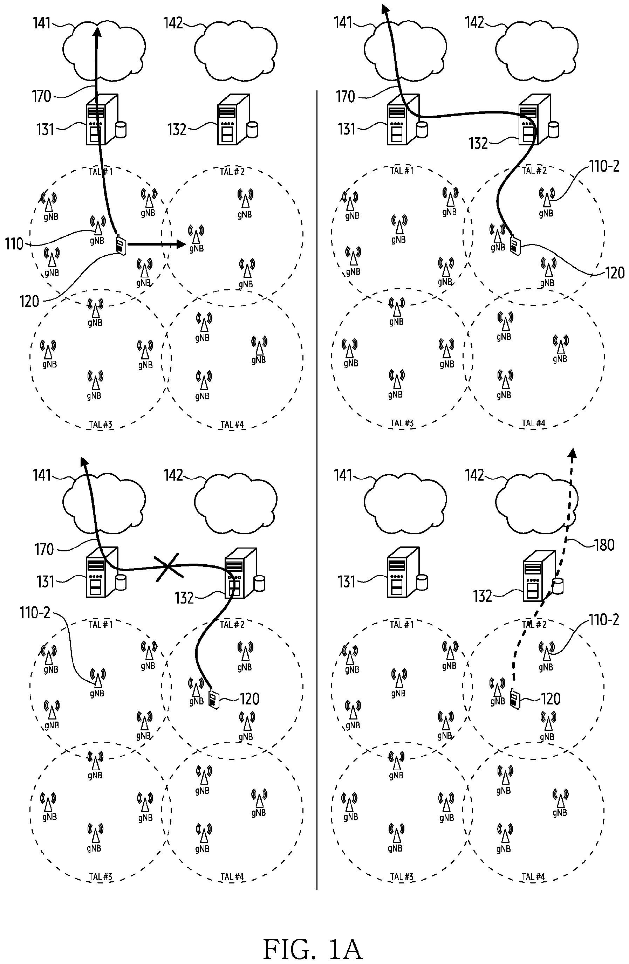

FIG. 1A illustrates an example of a session and service continuity (SSC) mode 2 according to an embodiment. In order to describe SSC mode 2, a situation in which a terminal moves from a service area of a UPF to a service area of another UPF is described.

Referring to FIG. 1A, a base station 110 is a network infrastructure that provides wireless access to a terminal 120. The base station 110 has coverage defined based on a distance capable of transmitting a signal. The base station 110 may be referred to as access point (AP), eNodeB (eNB), 5th generation node, next generation nodeB (gNB), wireless point, transmission/reception point (TRP), or other terms having equivalent technical meaning, in addition to the base station. Hereinafter, in describing the mobility of the terminal of the present disclosure, the base station 110 is referred to as the gNB and described, but it goes without saying that other terms may be used according to a communication environment or an embodiment.

The terminal 120 is a device used by a user and performs communication with the base station 110 through the wireless channel. A link from the base station 110 to the terminal 120 is referred to as downlink (DL), and a link from the terminal 120 to the base station 110 is referred to as uplink (UL). In addition, although not illustrated in FIG. 1A, the terminal 120 and another terminal may perform communication through a wireless channel between the terminal 120 and another terminal. At this time, a link between the terminal 120 and another terminal (device-to-device link, D2D) is referred to as a sidelink, and the sidelink may be used interchangeably with the PC5 interface. In some other embodiments, the terminal 120 may be operated without user involvement. According to an embodiment, the terminal 120 is a device that performs machine type communication (MTC) and may not be carried by a user. In addition, according to an embodiment, the terminal 120 may be a narrowband (NB)-internet of things (IoT) device. The terminal 120 may be referred to as user equipment (UE), customer premises equipment (CPE), mobile station, subscriber station, remote terminal, wireless terminal, electronic device, or user device, or other terms having equivalent technical meanings, in addition to the terminal. Hereinafter, in describing the mobility of the terminal of the present disclosure, the terminal 120 is referred to as the UE and described, but it goes without saying that other terms may be used according to a communication environment or an embodiment.

A first UPF 131 may provide a first service area. The first service area may consist of one or more tracking areas (TAs) within a PDU session associated with the first UPF 131. Each TA may be configured with a geographic area by one or more cells. Each cell may be configured by the base station 110 (e.g., gNB). The first service area may be serviced by the access network through an N3 interface between the access network and the first UPF 131. The first UPF 131 may be connected to a first edge cloud 141 through a first connection 170. The first UPF 131 may transmit a data packet of a UE 120 within the first service area to the first edge cloud 141. In addition, the first UPF 131 may transmit a data packet from the first edge cloud to the UE 120 within the first service area.

The UE 120 may move from the first service area to a second service area. For session and service continuity, the first UPF 131 may perform communication with the UE 120 through a second UPF 132. The first connection 170 may be maintained. Thereafter, a session and management function (SMF) (not illustrated) may release the first connection 170. The SMF may select the second UPF 132 as an anchor of the session. The SMF may trigger release of the session and may instruct the UE 120 to immediately set a second connection 180, which is a new connection to the same data network, with the second UPF 132.

The UE 120 may be connected to the second UPF 132. The second UPF 132 may provide the second service area. The second service area may be configured with one or more TAs within the PDU session associated with the second UPF 132. The second service area may be serviced by the access network through the N3 interface between the access network and the second UPF 132. The second UPF 132 may be connected to a second edge cloud 142 through the second connection 180. The second UPF 132 may transmit a data packet of the UE 120 within the second service area to the second edge cloud 142. In addition, the second UPF 132 may transmit a data packet from the second edge cloud to the UE 120 within the second service area.

In the SSC mode 2, reselection of the UPF may be performed according to the movement of the UE 120 in a hard handover method. As described above, the hard handover method is a method of stopping an existing service and then resuming a service at the next location. When the UE 120 moves after the PDU session is set in the first UPF 131, the second UPF 132 may be used as an intermediate UPF (I-UPF). The UE 120 may receive a service from the first UPF 131 through the second UPF 132. Thereafter, when the UE 120 changes from idle mode to active mode, the SMF may delete the existing PDU session and may generate a new PDU session using the second UPF 132 as a PSA UPF. In other words, the PDU session anchor (PSA) UPF serving as the anchor of the session may be changed from the first UPF 131 to the second UPF 132. As soon as the connection 170 with the first UPF 131 is released, the connection 180 with the second UPF 132 may be established.

Procedures in the SSC mode 2 include deleting the PDU session between the UE 120 and the first UPF 131 and establishing the PDU session between the UE 120 and the second UPF 132. For the procedures, multiple signaling occurs in the 5G network. Since the establishment of the PDU session is included after the PDU session is deleted, a temporary service disconnection occurs, and a delay occurs until the initiation of the next service.

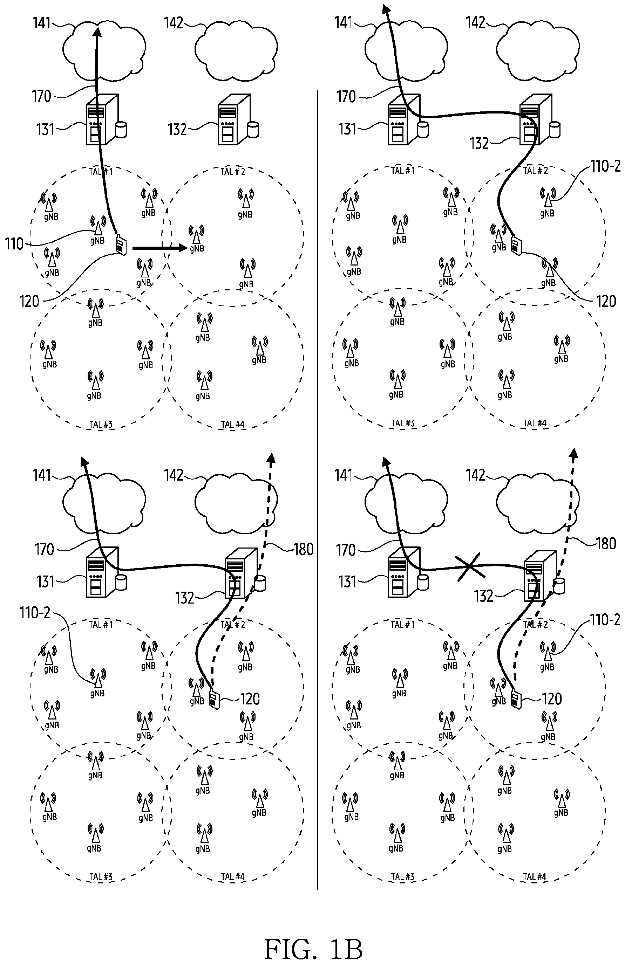

FIG. 1B illustrates an example of SSC mode 3 according to an embodiment. In order to describe the SSC mode 3, a situation in which a terminal moves from a service area of a UPF to a service area of another UPF is described. For description of the UPF and the service area, FIG. 1A may be referred to.

Referring to FIG. 1B, a UE 120 may move from a first service area to a second service area. For session and service continuity, a first UPF 131 may perform communication with the UE 120 through a second UPF 132. A first connection 170 may be maintained. A SMF may select the second UPF 132 as an anchor of the session. The SMF may instruct the UE 120 to set a second connection 180, which is a new connection, with the second UPF 132. The UE 120 may perform communication with both the first UPF 131 and the second UPF 132. The UE 120 may perform communication with a first edge cloud 141 associated with the first UPF 131 through the second UPF 132 in the second service area. The UE 120 may perform communication with a second edge cloud 142 associated with the second UPF 132 through the second UPF 132 in the second service area. The UE 120 may be connected to the second edge cloud 142 while being connected to the first edge cloud 141. Thereafter, the session and management function (SMF) may release the first connection 170.

In the SSC mode 3, UPF reselection may be performed according to the movement of the UE 120 in a soft handover method. As described above, the soft handover method sets a new service at a new location and then deletes the existing service. Among the methods for reselecting a PSA UPF, the SSC mode 3, branching point, uplink classifier (ULCL) method, and the like may be performed by the SMF. When the UE 120 moves, the second UPF 132 may be used as an intermediate UPF (I-UPF). The UE 120 may receive the service from the first UPF 131 through the second UPF 132. In addition, the UE 120 may receive the service from the second UPF 132 while receiving the service from the first UPF 131. Thereafter, the SMF may delete the existing PDU session. In other words, according to the movement of the UE 120, the PDU session anchor (PSA) UPF serving as an anchor for the session may be changed from the first UPF 131 to the second UPF 132. Before the connection 170 with the first UPF 131 is released, the connection 180 with the second UPF 132 may be established.

Procedures in the SSC mode 3 include establishing the PDU session between the UE 120 and the second UPF 132 and deleting the PDU session between the UE 120 and the first UPF 131. Service disconnection does not occur, but for the procedures, multiple signaling occurs in the 5G network. In addition, SSC mode 2 is performed only when the UE changes from idle mode to active mode, whereas the SSC mode 3 requires more signaling because it occurs every handover. For example, the SMF may require a PDU session modification command from the UE 120 through the AMF. In addition, for example, the SMF may request the AMF for a context for updating the PDU session.

As mentioned in FIGS. 1A and 1B, the reselection of the PSA UPF provides a service through the UPF close to the UE 120. Through this, the delay time of the service for the UE 120 is reduced. However, UEs that frequently cross service areas of the UPF within a short period of time significantly increase unnecessary signaling traffic in a control plane. In addition, whenever the PSA UPF change procedure is performed, the service quality decreases. The above-mentioned problems frequently occur in the boundary area of the service area, and as various types of high-speed terminals (e.g., autonomous vehicle, drone, IoT terminal) are frequently used, adverse effects may increase. In order to solve the above-mentioned problems, embodiments of the present disclosure propose an electronic device and method for reselecting the PSA UPF by obtaining information on the location of the UE, e.g. by using a machine learning method, and by predicting the UPF service area in which the UE will stay. By reselecting the PSA UPF based on a predicted location, which may be based on the machine learning result, signaling traffic in the control plane may be reduced and service quality may be increased.

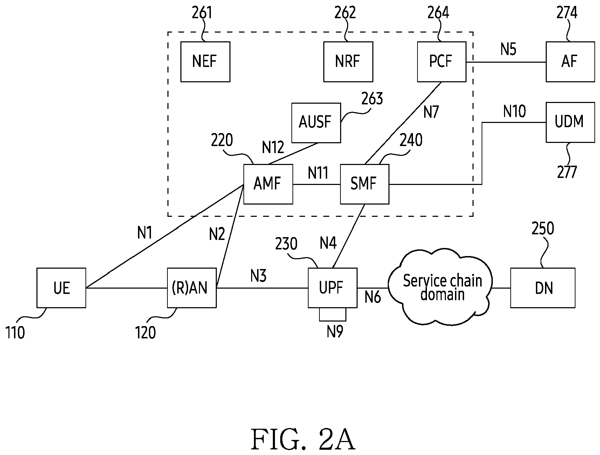

FIG. 2A illustrates an example of a 5^{th} generation (5G) core network according to an embodiment. In FIG. 2A, the network entities of the core network required for the SSC mode of FIGS. 1A and 1B are described.

Referring to FIG. 2A, the 5G system architecture may include various components (i.e., network function (NF)). A base station 110 and a UE 120 functioning as a node of the access network may perform communication with NFs of the 5G core network.

An AMF 220 may provide a function for access in a unit of UE and mobility management, and may be basically connected to one AMF per one UE. Specifically, the AMF supports functions such as signaling between CN nodes for mobility between 3GPP access networks, radio access network (RAN), control plane (CP), termination of interface (i.e., N2 interface), termination of NAS Signaling (N1), non-access stratum (NAS) signaling security (NAS ciphering and integrity protection), access stratum (AS) security control, registration management (registration area management), connection management, idle mode UE reachability (including control and performance of paging retransmission), mobility management control (subscription and policy), support for intra-system mobility and inter-system mobility, support for network slicing, SMF selection, lawful intercept (for AMF event and interface to LI system), providing delivery of a session management (SM) message between the UE 120 and the SMF 240, transparent proxy for SM message routing, access authentication, access authorization, including roaming permission check, providing delivery of a SMS message between the UE and the SMSF, security anchor function (SAF) and/or security context management (SCM), and the like. Some or all functions of the AMF 220 may be supported within a single instance of one AMF.

A UPF 230 delivers a downlink PDU received from a DN 250 to the UE 120 via (R)AN, and delivers an uplink PDU received from the UE 120 via the (R)AN to the DN 250. Specifically, the UPF 230 supports functions such as an anchor point for intra/inter RAT mobility, an external PDU session point of interconnect to data network, packet routing and forwarding, the user plane portion of packet inspection and policy rule enforcement, lawful intercept, reporting traffic usage, an uplink classifier for supporting routing of traffic flows to the data network, a branching point for supporting a multi-homed PDU session, QoS handling for the user plane (e.g., packet filtering, gating, uplink/downlink rate enforcement), uplink traffic verification (SDF mapping between service data flow (SDF) and QoS flow), transport level packet marking in uplink and downlink, downlink packet buffering and downlink data notification triggering function, and the like. Some or all functions of the UPF 230 may be supported within a single instance of one UPF.

The SMF 240 provides a session management function, and in case that the UE 120 has multiple sessions, each session may be managed by a different SMF 240. Specifically, the SMF 240 supports functions such as session management (e.g., session establishment, modification and termination, including tunnel maintenance between the UPF 230 and AN node (e.g., base station 110)), UE IP address allocation and management (including optionally authentication), selection and control of UP function, setting up traffic steering for routing traffic to the proper destination in UPF, termination of the interface toward policy control functions, enforcement of control parts of policy and quality of service (QoS), lawful intercept (for SM event and interface to LI system), termination of the SM parts of a NAS message, downlink data notification, initiator of AN-specific SM information (deliver to AN via AMF through N2), determination of the SSC mode (e.g., the SSC mode 2, the SSC mode 3) of the session, roaming function, and the like. According to embodiments, UPF selection may be performed by the SMF 240.

The DN 250 means, for example, an operator service, Internet access, or a 3rd party service, and the like. The DN 250 transmits a downlink protocol data unit (PDU) to the UPF 230 or receives a PDU transmitted from the UE from the UPF 230. Some or all functions of the SMF 240 may be supported within a single instance of one SMF.

A NEF 261 provides a means for securely exposing, provided by 3GPP network functions, for example, a 3rd party, internal exposure/ re-exposure, application function, services and capabilities for edge computing. The NEF 261 receives information (based on the exposed capability(s) of the other network function(s)) from the other network function(s). The NEF 261 may store received information as structured data by using a standardized interface to a data storage network function. The stored information may be re-exposed by the NEF 261 to other network function(s) and application function(s) and may be used for another purpose such as analysis, and the like.

A NRF 262 supports a service discovery function. The NRF 262 receives an NF discovery request from an NF instance and provides information on the discovered NF instance to the NF instance. In addition, the NRF 262 maintains available NF instances and the service they support.

An AUSF 263 stores data for authentication of the UE 120.

A PCF 264 receives information on packet flow from an application server and provides a function of determining policies such as mobility management and session management, and the like. Specifically, the PCF 264 supporting functions such as support for a unified policy framework to control network operation, providing policy rules so that CP function(s) (e.g., AMF 220, SMF 240, and the like) may enforce policy rules, implementing a frontend to access relevant subscription information for policy decisions within a user data repository (UDR), and the like.

An AF 274 interacts with the 3GPP core network for service provision (For example, supporting functions such as application influence on traffic routing, access to network capability exposure, and interaction with policy framework for policy control).

An UDM 277 stores user subscription data, policy data, and the like. The UDM 277 includes two portions, in other words, an application front end (FE) and a user data repository (UDR).

In a 3GPP system, a conceptual link connecting between NFs in the 5G system is defined as a reference point or interface. The following illustrates the reference point included in the 5G system architecture represented in FIG. 1.
- N1: the reference point or the interface between the UE 120 and the AMF 220
- N2: the reference point or the interface between the (R)AN 110 and the AMF 220
- N3: the reference point or the interface between the (R) AN 110 and the UPF 230
- N4: the reference point or the interface between the SMF 240 and the UPF 230
- N5: the reference point or the interface between the PCF 264 and the AF 274
- N6: the reference point or the interface between the UPF 230 and the DN 250
- N7: the reference point or the interface between the SMF 240 and the PCF 264
- N8: the reference point or the interface between the UDM 277 and the AMF 220
- N9: the reference point or the interface between two core UPFs
- N10: the reference point or the interface between the UDM 277 and the SMF 240
- N11: the reference point or the interface between the AMF 220 and the SMF 240
- N12: the reference point or the interface between the AMF 220 and the AUSF 263
- N13: the reference point or the interface between the UDM 277 and the AUSF 263
- N14: the reference point or the interface between two AMFs
- N15: In case of non-roaming scenario, the reference point between the PCF 264 and the AMF 220, in case of roaming scenario, the reference point or the interface between the PCF 264 and the AMF 220 within a visited network

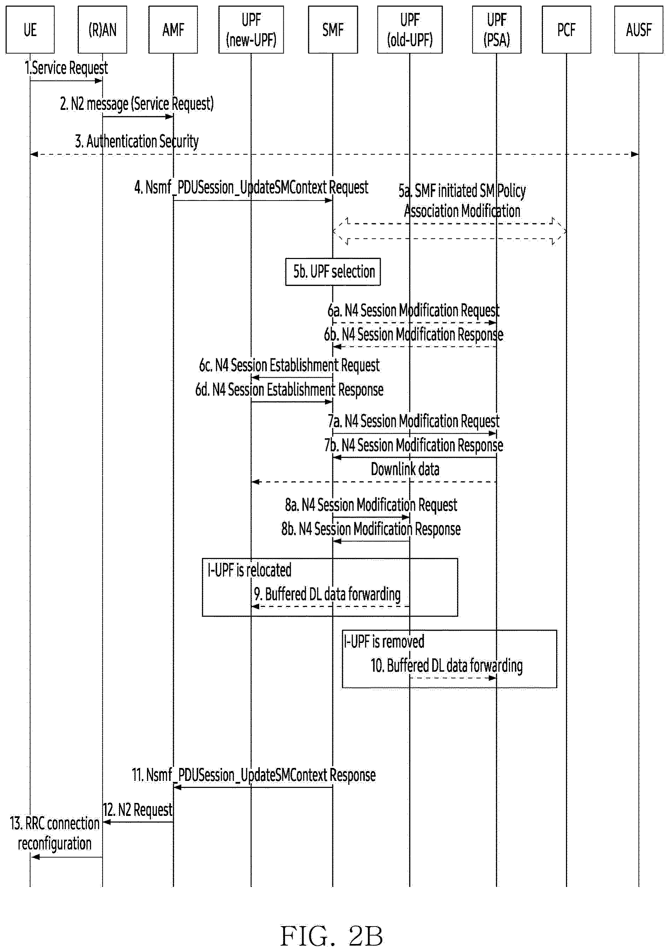

FIG. 2B illustrates an example of a service request procedure according to an embodiment. The service request procedure may be used by a UE in a connection management (CM) idle state (i.e., CM-IDLE) or by SGC which is for requesting the setting of a secure connection to AMF. The service request procedure may be used to activate the user plane connection for the set PDU session, and may also be used both when the UE is in the CM idle state and in the CM connection state (i.e., CM-CONNECTED).

In the service request procedure initiated by the 5GC, a SMF (e.g., a SMF 240) may transmit a request message (e.g., N1N2 Message Transfer Request message) to an AMF (e.g., an AMF 220). The SMF 240 may transmit the serving area of the current PSA UPF to the AMF 220 through the request message. In case that the location where the UE (e.g., a UE 120) transmits the service request message is located within the area received from the SMF 240, the AMF 220 may omit some procedures.

Referring to FIG. 2B, the service request procedure of the UE is described. In step 1, the UE 120 may transmit the service request message to a base station 110. The service request message may include, for example, AN parameters, PDU session list, security parameters, PDU session status, and 5G-S temporary mobile subscriber identity (TMSI).

In step 2, the base station 110 may transmit the N2 message to the AMF 220. The N2 message may include the service request and N2 parameters.

In step 3, the AMF 220 may perform an authentication procedure.

In step 4, the AMF 220 may transmit a response message including the context for updating the PDU session to the SMF 240.

In step 5a, the SMF 240 may perform an SM policy association modification procedure with the PCF 264. The step 5a may be omitted.

In step 5b, the SMF 240 may perform UPF selection.

In step 6a, the SMF 240 may transmit an N4 session management modification request message to the UPF (PSA).

In step 6b, the SMF 240 may receive an N4 session management modification response message from the UPF (PSA).

In step 6c, the SMF 240 may transmit an N4 session establishment request message to a new UPF. The new UPF may be an I-UPF.

In step 6d, the SMF 240 may receive the N4 session establishment response message from the new UPF.

In step 7a, the SMF 240 may transmit the N4 session management modification request message to the UPF (PSA).

In step 7b, the SMF 240 may receive the N4 session management modification response message from the UPF (PSA).

In step 8a, the SMF 240 may transmit the N4 session management modification request message to a previous UPF. The previous UPF may be the I-UPF.

In step 8b, the SMF 240 may receive the N4 session management modification response message from the previous UPF.

In step 9, the I-UPF may be reallocated. The previous UPF may forward buffered downlink data to the new UPF.

In step 10, the I-UPF may be removed. The previous UPF may provide forwarding of buffered downlink data to the anchor UPF, in other words, the PSA UPF.

In step 11, the SMF 240 may transmit the response message including the context for updating the PDU session to the AMF 220.

In step 12, the AMF 220 may transmit an N2 request message to the base station 110.

In step 13, the base station 110 may transmit an RRC connection reconfiguration message to the UE 120. Subsequent procedures are omitted for convenience of description.

According to the 3GPP standard, in case that the location of the current UE 120 is within the "area of validity for N2 SM (hereinafter, validity area)", steps from 4 to 11 may be omitted. The area of validity may indicate the serving area of the current PSA UPF. The serving area of the current PSA UPF may be expressed as a list of tracking area of identity (TAI). The TAI means an identifier of the tracking area. If steps from 4 to 11 are omitted, signaling traffic may be reduced. However, since a serving area of UPF generally is configured with tens to hundreds of TAs, delivering all of the serving areas of the UPF rather dramatically increases the size of the message. Thus, in reality, it is difficult to deliver all serving areas.

In order to solve the above-mentioned problems, embodiments of the present disclosure propose a technique for reducing the signaling traffic of the service request procedure by obtaining information on the location of the UE and predicting the service area (SA) or even tracking area (TA) in which the UE will stay. Due to a decrease in delay time, service quality may be improved.

When the change operations of the UPF are frequently performed, the signaling traffic increases and the delay time is generated. Increasing signaling traffic and delay time cause an increase in costs for telecommunication operators. The SMF, UPF, or computing device according to embodiments of the present disclosure may predict movement for each UE by learning a movement pattern of the UE. The SMF may reselect the PSA UPF for the UE based on the prediction result of the movement of the UE. In addition, the signaling traffic of the core network may be reduced by providing the AMF with the service area of validity of the UPF which is set based on the prediction result of the movement of the UE. Thus, in the present disclosure, a method for reducing the change operation of the UPF by predicting the future location of the UE and the service area of validity of the UPF is described.

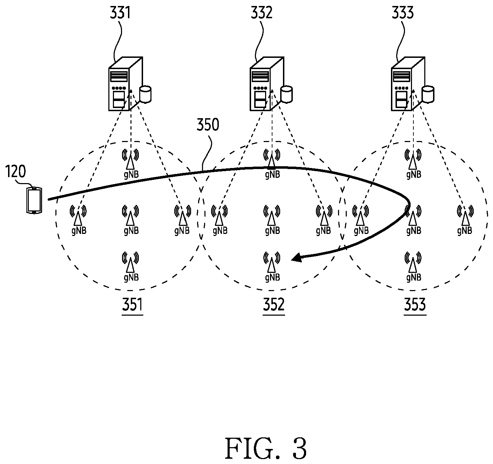

FIG. 3 illustrates movement of a terminal between service areas of a user plane function (UPF) according to an embodiment. According to the movement of the service area, reselection of the PSA UPF may be performed.

Referring to FIG. 3, the service area may include one or more TAs. Each TA may be configured with one or more cells covering a specific geographic area. A first service area 351 may be provided by a first UPF 331. A second service area 352 may be provided by a second UPF 332. A third service area 353 may be provided by a third UPF 333.

UE 120 may move across the service areas. The UE 120 may move from the first service area 351, via the second service area 352, into the third service area 353. Thereafter, the UE 120 may move back from the third service area 353 to the second service area 352. A movement 350 of the UE 120 may cause reselection of the PSA UPF.

Whenever the UE 120 enters a new service area, if the PSA UPF is changed, signaling traffic of the core network increases in proportion to the number of the service areas into which the UE 120 enters. However, for example, in case that the UE 120 stays in the third service area 353 for only a relatively small amount of time and then enters the second service area 352 again, the signaling traffic for reselection from the second UPF 332 to the third UPF 333 and reselection from the third UPF 333 to the second UPF 332 is not efficient. In particular, a method such as SSC mode 3 may perform determination whether UPF reselection is required for each handover. However, a method such as SSC Mode 2 does not determine the UPF reselection every handover. Thus, the UPF reselection from a long-term perspective rather than soft handover is required.

A method of selecting the PSA UPF in which the UE 120 will stay the longest may be used by setting a relatively long time (e.g., 30 minutes) to be used for prediction. The UE 120 is changed to active mode in the first service area 351 of the first UPF 331. Thereafter, it may move through several service areas. For example, the UE 120 may stay in the first service area 351 of the first UPF 331 for about 5 minutes. The UE 120 may stay in the second service area 352 of the second UPF 332 for about 20 minutes. The UE 120 may stay in the third service area 353 of the third UPF 333 for about 5 minutes. Since the UE 120 stays in the second service area 352 of the second UPF 332 for a large amount of time within the designated time, the SMF may select the second UPF 332 as the PSA UPF (i.e., as a PSA UPF candidate). By selecting the PSA UPF based on the residence time for each service area according to the movement 350 of the UE 120, frequent PSA UPF changes may be reduced and service quality may be improved.

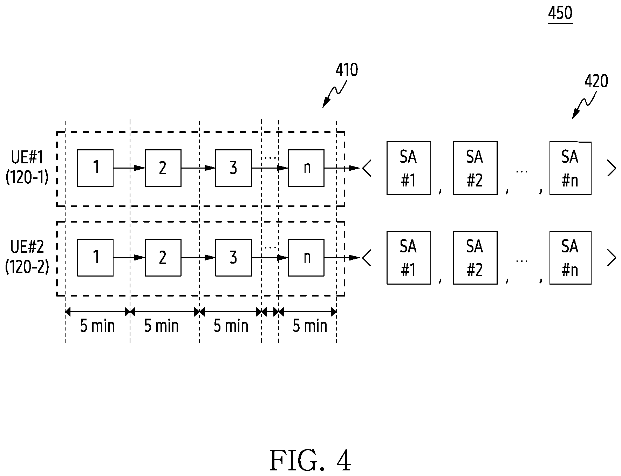

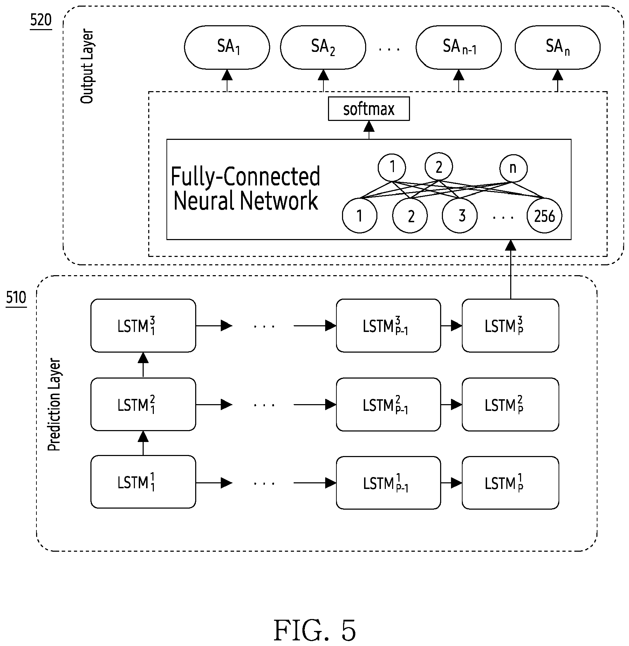

Hereinafter, examples of learning procedures using the residence time for each service area are described in FIGS. 4 and 5.

FIG. 4 illustrates learning about a service area of a UPF according to an embodiment.

Referring to FIG. 4, UE mobility may be repeated and learned in a regular time unit (e.g., 5 minutes). Based on the learning result, the location of the UE at a specific timing may be predicted. The computing device for learning may perform UE mobility tracking per unit time and may use the performance result as input data 410. Tracking of the UE mobility may be performed per UE.

A session management device (e.g., SMF) or a computing device (e.g., network data analytics function (NWDAF)) for the session management device (hereinafter, an electronic device) may generate output data based on the input data 410. Based on the input data 410, the residence time in each service area may be generated as the output data. Based on the input data 410 for a first UE 120-1, the expected residence time in each service area may be generated as output data 420. Based on the input data 410 for a second UE 120-2, the expected residence time in each service area may be generated as the output data 420.

By connecting previous location paths of the time unit (e.g., 5 minutes) for each UE, one sequence for each UE may be generated as the input data 410 for learning. For example, 1 to p mean the index of the path that the UE has moved per unit time (e.g., tracking area, RAN area, gNB, cell). Index '1' indicates the farthest past location, and UEs may move from the service area of index '1' to the service area of index 'p'.

The UE mobility learning method according to the embodiments may express the residence time (or access time) for each service area as a single vector and may use a single number of times of learning. Since the learning method learns with the single vector, it may provide a large amount of learning reduction effect compared to the learning method based on the regular time unit.

The output data 420 may be configured with one vector for each UE. The value of each vector may be expressed as the service area (SA) and the expected residence time in the SA. Based on the mobility pattern of the previous UE, the expected residence time for each SA of the UE in the upcoming time interval may be expressed as an output vector. For example, the location of the element of the vector may indicate the ID (or the identifier of the TAI list corresponding to the SA) of the SA, and the value of the element may indicate the residence time of the UE corresponding to the SA ID. The output data 420 may include the residence time for each SA within the designated time (e.g., 30 minutes). For example, as illustrated in FIG. 3, a total of three SAs (e.g., a first service area 351, a second service area 352, a third service area 353) may be a learning target for the UE mobility. The residence time corresponding to each SA may be determined as an element value of the vector.

FIG. 5 illustrates an example of a machine learning model according to an embodiment. As an example of the machine learning model, a stacked recurrent neural network (RNN) that learns sequential inputs and a Fully Connected (FC) neural network for output generation may be used. The RNN means to an RNN-based AI model, and RNN-based models such as long short-term memory (LSTM) or GRU may be used. Meanwhile, FIG. 5 is exemplary and may be replaced with another AI model other than RNN for machine learning according to embodiments of the present disclosure.

Referring to FIG. 5, the machine learning model for the UE mobility learning according to an embodiment may use an RNN-based long short-term memory (LSTM) specialized for time-series data learning.

The prediction layer 510 for learning and prediction may include a 3-layer stacked LSTM. The prediction layer 510 using 3-layer stacked LSTM may be configured with three layers including LSTM cells for each area. The three layers may include a first layer, a second layer, and a third layer in order from bottom to top. The first layer is an input layer for receiving a previous location path (Xp) of the UE. In the input layer, the Xp inputted to each of the LSTM cell indicates previous location information at a fixed time interval, and may be sequentially inputted from X1 to Xp as long as the length of the input sequence. The second layer and the third layer may be hidden layers that are not involved in input and output. Although three layers are described in FIG. 5, the number of layers (e.g., 3) and the number of nodes (e.g., p) of Stacked LSTM may be set to optimal values according to the application environment.

The output layer 520 for output generation may use an activation function softmax for a fully-Connected (FC) layer. The output layer 520 may indicate and output the time stayed in the corresponding service area for a certain period of time as a ratio. For example, if a specific UE is expected to be in the first SA (SA1) for 21 minutes and the second SA (SA2) for 9 minutes for the next 30 minutes, as a result value, the output layer 520 may output 0.7 as a value corresponding to the first SA and may output 0.3 as a value corresponding to the second SA. The output layer 520 may output a vector of {SAi, SA₂, ..., SAₙ}. The LSTM, which is one of the machine learning methods, may be used in place of other machine learning model methods such as gated recurrent unit (GRU), transformer network, and the like.

However, alternative methods may be used in order to obtain prediction information on the residence time of a UE per SA of a UPF, which do not rely on machine learning, but e.g. on simple statistical analysis or the like. While the corresponding prediction may be slightly less accurate, the computational effort needed to obtain the prediction may also be smaller.

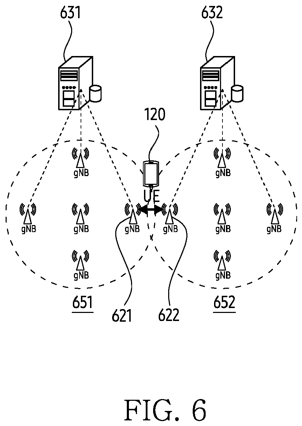

FIG. 6 illustrates an example of UPF reselection in a boundary area of a service area according to an embodiment.

Referring to FIG. 6, a UE 120 may move from a first service area 651 to a second service area 652. The first service area 651 may be provided by a first UPF 631. The first service area 651 may include a first cell of a first base station 621. The second service area 652 may be provided by a second UPF 632. The second service area 652 may include a second cell of a second base station 622. In SSC mode 3, in other words, a soft handover method, there is almost no decrease in service quality since resources for a service are allocated in advance. However, since the PSA UPF may be performed every handover, excessive signaling may be caused for the UE 120 moving between service areas of the UPF. In particular, in the UE 120 located in the boundary area, a ping-pong phenomenon may easily occur between the first base station 621 and the second base station 622 (or between the first cell and the second cell), and due to excessive signaling traffic in the core network, a delay may occur.

According to embodiments, a session management device (e.g., SMF) or a computing device for the session management device may predict the location of the UE 120 for a designated time (e.g., a time shorter than that of SSC mode 2) in order to prevent the excessive signaling due to the ping-pong phenomenon. The session management device may determine whether or not to reselect the PSA UPF through the time to stay in the changed UPF. Since it determines whether or not to reselect the PSA UPF at each handover, the session management device (e.g., SMF) or the computing device for the session management device may predict a shorter time unit (e.g., 5 minutes) than the hard handover method.

The session management device may determine whether to reselect the UPF whenever it enters the service area. According to an embodiment, the session management device may select the UPF corresponding to the service area as the PSA UPF candidate in case that the expected residence time corresponding to the service area into which the UE 120 has entered is longer than the reference value according to the prediction unit of the UE 120. For example, the prediction result may include a location of the service area to which the UE 120 will stay and a time it will stay. Only in case that the UPF to be changed at the current location exceeds a minimum threshold (e.g., 95%), the session management device or the computing device for the session management device may determine the change of the PSA UPF to the UPF. For example, when predicting every 5 minutes, UPF reselection to the UPF may be performed only in case that it is expected to stay in the moved UPF for more than 4 minutes and 45 seconds. The number of times of the UPF reselection procedure is reduced, so that signaling of the core network may be reduced.

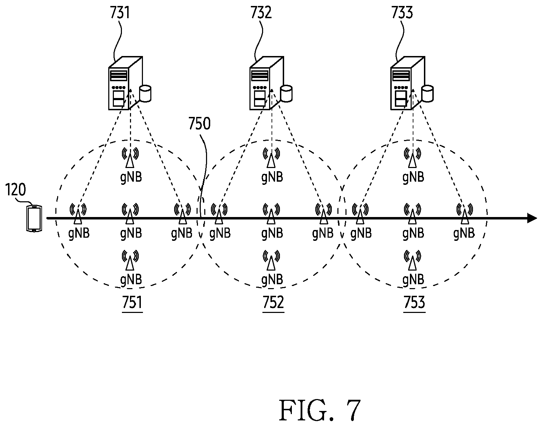

FIG. 7 illustrates an example of UPF selection according to high-speed movement of a terminal according to an embodiment. The terminal exemplifies a UE 120.

Referring to FIG. 7, the UE 120 mounted on a high-speed moving equipment (e.g., a train, a train, a car) or the UE 120 of the user in the equipment moves across multiple service areas within a relatively short time. The UE 120 may move across between service areas. For example, the UE 120 may pass through a first service area 751, a second service area 752, and a third service area 753. The first service area 751 may be provided by a first UPF 731. The second service area 752 may be provided by a second UPF 732. The third service area 753 may be provided by a third UPF 733. If the UE 120 repeatedly perform release and reselection of the PSA UPF whenever entering a service area of a new UPF, excessive traffic is generated in the core network. Thus, the session management device (e.g., SMF) according to the embodiments may perform reselection to the UPF only in case that the UE 120 stays within the service area of the UPF for a period longer than a certain ratio of the predicted unit time.

Meanwhile, in case that the UE 120 continues to move, if the UPF change is not performed for too long, the transmission path may be excessively long. For example, through the PSA UPF and one or more I-UPF(s), the length of the transmission path from the UE 120 to the edge cloud may be extended. Thus, according to an embodiment, the session management device may perform UPF reselection, regardless of the prediction result, in case that UPF reselection has not been performed for a threshold time (e.g., 30 minutes). Through this, the length of the transmission path from the edge cloud to the UE 120 may be managed by the SMF.

The PSA UPF may provide the service area. Here, the service area of the PSA UPF may be referred to as an area of validity. The area of validity is N2 session management (SM) information, and may be provided to the AMF through the SMF. As mentioned in FIG. 2B, when moving within the area of validity, procedures by the AMF are omitted. Thus, it is advantageous to widely form the area of validity in terms of traffic efficiency of the core network. The area of validity may be configured with one or more tracking areas (TAs). However, if the area of validity includes all possible TAs, the size of the message for providing the area of validity increases. In other words, the size of the message from the SMF to the AMF and AMF signaling have a trade-off relationship. In order to solve the above-mentioned problems, one or more TAs in the area of validity may be identified based on mobility information of the UE, instead of the area of validity including a relatively small number of TAs. Traffic in the entire core network may be reduced by identifying a predicted TA for the area of validity based on the prediction result according to the movement of the UE.

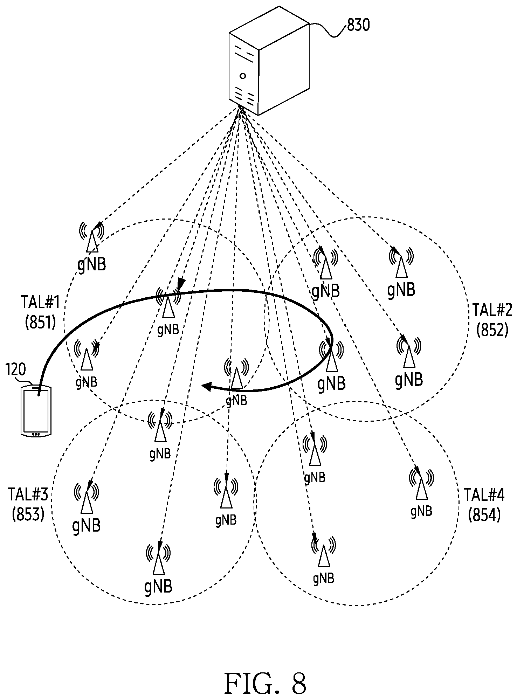

FIG. 8 illustrates an example of an area of validity according to an embodiment. The area of validity may include one or more TAs. The SMF may set at least a portion of the current service area by PSA UPF as the area of validity and may provide the area of validity to the AMF.

Referring to FIG. 8, a PSA UPF 830 may have the service area corresponding to four TAs. For example, the four TAs may include a first TA 851, a second TA 852, a third TA 853, and a fourth TA 854. The message reduction method in the service request procedure through the area of validity may include an operation of delivering area information including the one or more TAs identified based on a predicted UE movement pattern to the AMF, instead of delivering all TAs of the UPF. Through this, not only may the message size from the SMF to the AMF be greatly reduced, but also the function may be improved to a practically usable level.

The area of validity may include the one or more TAs identified based on the probability that UE 120 will stay during the service request procedure. The UPF service area is predicted in FIGS. 3 to 7 and the location of the TA, which is a unit smaller than the UPF service area, is predicted in FIG. 8. The machine learning model of FIGS. 4 to 5 may be applied to the configuration of the area of validity of FIG. 8 in the same manner by changing the TA instead of the service area. In learning and prediction, preprocessing in units of TA may be performed. The output of the machine learning model may include a residence time for each TA. For example, based on the movement pattern of the UE 120, the UE 120 is expected to stay in the first TA 851 and the second TA 852 within the service area of the UPF 830.

The area of validity may include the one or more TAs identified based on the prediction result of the movement of the UE. The TA identified based on the prediction result may be referred to as a predicted TA. The SMF may generate information on the area of validity including the first TA 851 and the second TA 852. The information on the area of validity may not include the third TA 853 and the fourth TA 854. By excluding the third TA 853 and the fourth TA 854, the size of information on the area of validity is reduced. However, even if the size of the information on the area of validity is reduced, it is predicted that the UE 120 will not enter the third TA 853 or the fourth TA 854. In other words, the method of configuring the area of validity based on the prediction result of the movement of the UE 120 is advantageous in terms of traffic efficiency of the core network compared to the method of configuring the area of validity including all TAs. The area of validity for the N2 SM is formed based on a learning result according to a movement pattern of a specific UE, and may be UE-specific. Through the UE-specific area of validity, traffic reduction performance similar to that of a service area including substantially all TAs may be achieved.

One or more predicted TAs may be identified among all TAs of the UPF based on the learning result. According to an embodiment, the number of the predicted TAs may be fixed. For example, the number of the predicted TAs may be 2. The SMF (or NWDAF) may include the top two TAs having a high residence time as the area of validity based on the learning result according to the movement of the UE. According to another embodiment, the predicted residence time corresponding to the predicted TA may be greater than or equal to a threshold. For example, the predicted residence time may be calculated in an absolute time unit. For another example, the predicted residence time may be calculated in a unit of a ratio of the expected residence time to the unit interval for prediction. Based on the learning result according to the movement of the UE, the predicted residence time for each TA may be determined. The SMF (or NWDAF) may include the one or more TAs having the residence time higher than the threshold as the area of validity.

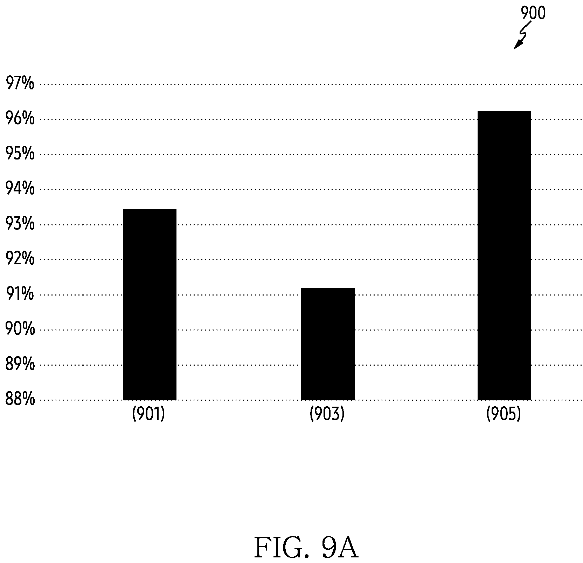

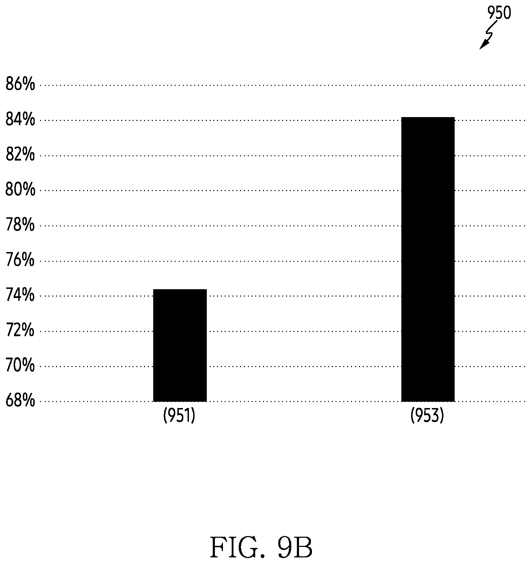

FIGS. 9A and 9B illustrate examples of performance of UPF reselection using machine learning according to an embodiment. For performance verification of a predictive model (e.g., LSTM) according to embodiments, data may be collected from a total of 62 base stations (e.g., gNBs) of a commercial 5G network. A prediction result of UE mobility may be obtained based on the collected data.

Referring to FIG. 9A, a histogram 900 indicates accuracy for each method. The vertical axis of the histogram 900 indicates prediction accuracy (unit: percent (%)).

A first method 901 means the UPF reselection of the PSA UPF using the prediction result of the UE mobility in SSC mode 2 of 3GPP. The movement of the UE is measured in the service area for each PSA UPF for a designated time (e.g., 30 minutes). If the UPF predicted that the UE will stay for the longest time and the UPF with which the UE actually stays for the longest time match, the prediction result is treated as correctly predicted. Referring to the histogram 900, an accuracy of about 93% is confirmed in the first method 901.

A second method 903 means UPF reselection of the PSA UPF using the prediction result of the UE mobility in SSC mode 3 of the 3GPP. The movement of the UE is measured in the service area for each PSA UPF for the designated time (e.g., 5 minutes). If the UPF predicted that the UE will stay for the longest time and the UPF with which the UE actually stays for the longest time match, the prediction result is treated as correctly predicted. The designated time for learning in the SSC mode 3 may be configured to be shorter than the designated time for learning in the SSC mode 2. Referring to the histogram 900, an accuracy of about 91% is confirmed in the second method 903.

The third method 905 means PSA UPF selection based on the prediction result of mobility. The movement of the UE is measured within the TAs of the PSA UPF for a designated time (e.g., 30 minutes). If the UE identifies the TAs that are predicted to stay above the threshold and the UE actually stays within the TAs for a certain period of time, the prediction result is treated as correctly predicted. Referring to the histogram 900, an accuracy of about 96% is confirmed in the third method 903.

Referring to FIG. 9B, a histogram 950 indicates the UPF reselection ratio for each method. The vertical axis of the histogram 900 indicates the UPF reselection ratio (unit: percentage (%)).

The first method 951 means the UPF reselection of the PSA UPF using the prediction result of the UE mobility in the SSC mode 2 of the 3GPP. In the SSC mode 2 of the first method 951, when the UE is changed to active mode, whether to reselect UPF may be determined. When a service request occurs, the reselection of the UPF may be caused. Thus, the number of times of the UPF reselection according to embodiments may be calculated based on the service request frequency. In the first method 951, a signaling reduction effect of about 74% may be confirmed.

The second method 951 means the UPF reselection of the PSA UPF using the prediction result of the UE mobility in the SSC mode 2 of the 3GPP. In the SSC mode 3 of the second method 953, whether to reselect UPF may be determined whenever the service area of the UPF is changed. Based on the frequency of entry of the UE into the new service area, the number of the UPF reselection according to embodiments may be calculated. In the second method 951, the signaling reduction effect of about 84% may be confirmed.

In 5G, the MEC architecture significantly improves delay time in a wireless mobile communication environment. However, as user plane devices such as the UPF or gateway (GW)-user plane (U) operate based on location, additional traffic for service migration is generated. Increased traffic adversely affects 5G core performance. In particular, in order to support delay-sensitive services such as URLLC, the serving area of the UPF may become smaller and smaller and may be disposed in an area adjacent to a RAN node (e.g., base station 110). In addition, as high-speed devices such as an autonomous vehicle and a drone are added to the 5G network, the problem caused by excessive traffic is expected to intensify. Thus, by selecting a more suitable UPF through UE location prediction using machine learning through the proposed method, signaling traffic may be greatly reduced and service quality may be improved.

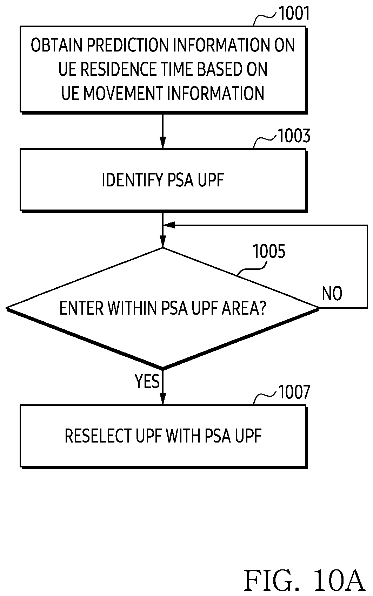

FIG. 10A illustrates an operation flow of a session management device for UPF reselection according to embodiments. The session management device may include a SMF (e.g., SMF 240). The UPF reselection may include UPF relocation. The SMF 240 may relocate the UPF serving as a PDU session anchor for a PDU session as defined in 3GPP TS 23.502. The UPF relocation may be triggered by a mobility event such as handover or may be triggered independently of UE mobility. According to an embodiment, the SMF 240 may trigger the UPF relocation based on a learning result about movement of a UE (e.g., a UE 120).

Referring to FIG. 10A, in operation 1001, the SMF 240 obtains prediction information on the UE residence time based on the UE movement information. The UE movement information may include learning data on the movement of the UE 120 within the service areas of the UPFs. Based on the learning data, the SMF 240 or an operation node (e.g., NWDAF) for the SMF 240 may generate the prediction information on the residence time of the UE 120. The SMF 240 may obtain the prediction information. According to an embodiment, the prediction information may be generated based on machine learning. For example, the input data and output data of FIG. 4 and the neural network model of FIG. 5 may be used for the prediction information. As indicated earlier, prediction information may be obtained in an alternative manner, not based on machine learning, but e.g. may using statistical analysis of mobility information of the UE.

The prediction information may be specific to the UE 120. According to an embodiment, the prediction information may include information on one or more expected service areas in which the UE 120 is predicted to move and the residence time in each expected service area. According to an embodiment, the prediction information may be configured with a single vector for the UE 120. A location of an element of the vector may indicate the service area, and a value of the element may indicate the residence time of the UE 120 in the service area.

At operation 1003, the SMF 240 identifies a PSA UPF. The SMF 240 may identify the PSA UPF based on the prediction information. The PSA UPF refer to a UPF that may serve as a new anchor for UPFs. In other words, the PSA UPF may indicate a UPF to be changed for the UE 120 . The SMF 240 may predict and identify a PSA UPF to be changed for the UE 120 in advance. The SMF 240 may identify a UPF, which is a target for triggering a PSA change when the UE 120 enters a corresponding service area. In aspects of identifying possible PSA UPF(s) in advance, the PSA UPF may be referred to as a PSA UPF candidate, a target PSA UPF, or a predicted PSA UPF. The SMF 240 may identify the PSA UPF independently of identifying an event according to the movement of the UE 120. In other words, even if the UE 120 enters a new service area, the SMF 240 does not uniformly change the currently set PSA UPF. The SMF 240 does not uniformly change the currently set PSA UPF even if the UE 120 changes to active mode. The PSA UPF may be identified based on the movement speed of the UE 120, the location of the UE 120, the SSC mode, or the disposition of the UPFs. The SMF 240 may identify a UPF that stays relatively long as the PSA UPF compared to the movement speed of the UE 120. The SMF 240 may reduce the number of signaling according to the UPF relocation by identifying the PSA UPF based on the movement pattern of the UE 120. Through this, the traffic burden of the 5G core network may be reduced.

In operation 1005, the SMF 240 may identify whether the UE 120 enters within a PSA UPF area. For example, the UE 120 may move from a first service area of a first UPF to a second service area of a second UPF. The UE 120 may enter the second service area. The SMF 240 may identify whether the second UPF corresponds to the PSA UPF identified in operation 1003 based on identifying that the UE 120 enters the second service area. In other words, the SMF 240 may identify whether the UE 120 will stay in the second UPF for a designated time or more than a designated ratio from prediction information. In case that the second UPF is the PSA UPF, the SMF 240 may determine that the UE 120 enters within the PSA UPF area. The SMF 240 may perform operation 1007. However, in case that the second UPF is not the PSA UPF, the SMF 240 may perform the operation 1005 again. In other words, the SMF 240 may maintain the PDU session for the first UPF.

In operation 1007, the SMF 240 may perform UPF reselection with the PSA UPF. For example, the UE 120 may move from the first service area of the first UPF to the second service area of the second UPF. The SMF 240 may perform PSA change to the second UPF. The SMF 240 may perform a PDU session establishment procedure for a new PDU session with the second UPF, with the UE 120. According to an embodiment, in SSC mode 2, the SMF 240 may release a first PDU session with the first UPF and the UE 120. After the first PDU session is released, the SMF 240 may perform a PDU session establishment procedure for a second PDU session with the second UPF and the UE 120, with the UE 120. According to another embodiment, in SCC mode 3, the SMF 240 may perform the PDU session establishment procedure for the second PDU session with the second UPF and the UE 120, with the UE 120. After the second PDU session is established, the SMF 240 may release the first PDU session with the first UPF and the UE 120.

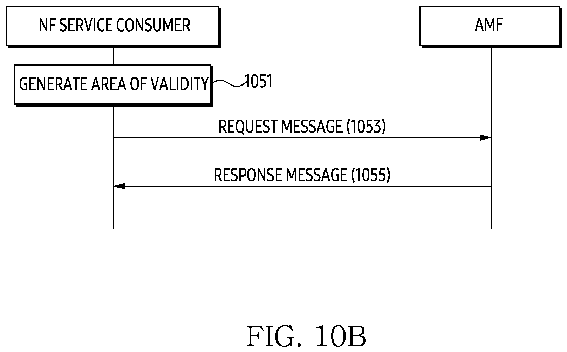

FIG. 10B illustrates signaling between entities for configuring a validity area according to embodiments. An NF service consumer of FIG. 10B illustrates SMF. The network entity configuring an area of validity may include the SMF. The network entity that determines whether a UE is within the area of validity may include AMF.

Referring to FIG. 10B, in operation 1051, the SMF (e.g., SMF 240) creates the area of validity. According to an embodiment, the SMF 240 or a computing device for the SMF 240 (e.g., NWDAF) may predict a residence time for each TA within the UPF of the UE based on the learning result of the movement of the UE. The SMF 240 may obtain the result of the prediction. The SMF 240 may identify one or more TAs (i.e., predicted TAs) in which the movement of the UE is predicted, instead of setting TAs for all serviceable areas of the UPF as the area of validity. The SMF 240 may generate the area of validity including the identified one or more TAs.

In operation 1053, the SMF 240 transmits a request message to the AMF (e.g., the AMF 220). The SMF 240 may transmit a POST request to the AMF 220 as the NF service consumer. For the delivery of N1 information (information for the N1 interface between the UE 120 and the AMF 220) and N2 information (information for the N1 interface between a base station 110 (e.g., gNB) and the AMF 220), the SMF 240 may transmit the POST request to the AMF 220. The SMF 240 may include a uniform resource identifier (URI) for 'N1N2MessageTransfer Notification' in the request message.

In operation 1055, the SMF 240 transmits a response message to the AMF 220. For example, in case that the AMF 220 may deliver a N1 message of the SMF 240 to the UE 120 and/or may deliver a N2 message to the base station 110, the AMF 220 may accept the request. The AMF 220 may transmit the response message indicating "200 OK" to the SMF 240. Meanwhile, if the request is not accepted, the AMF 220 may transmit the response message indicating "4xx/5xx response" to the SMF 240.

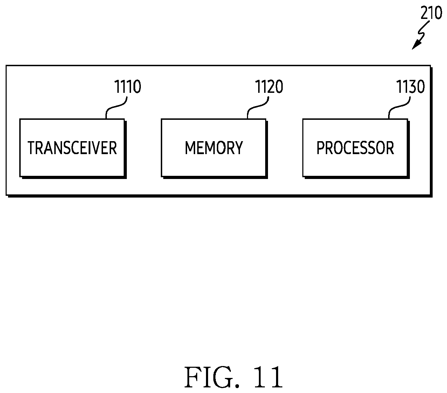

FIG. 11 illustrates a functional configuration of a session management device according to embodiments. The session management device means the session management device (e.g., SMF) through FIGS. from 1A to 10. The configuration illustrated in FIG. 11 may be understood as a configuration of the SMF 240. The terms '...unit', '...er', and the like used below means a unit that processes at least one function or operation, and it may be implemented by hardware or software, or a combination of hardware and software.

Referring to FIG. 11, the session management device includes a transceiver 1110, a memory 1120, and a processor 1130.

The transceiver 1110 may perform functions for transmitting and receiving a signal in a wired communication environment. The transceiver 1110 may include a wired interface for controlling a direct connection between the device and the device through a transmission medium (e.g., copper wire, optical fiber). The transceiver 1110 may support an N2 interface. For example, the transceiver 1110 may transmit an electrical signal to a node of the base station (e.g., gNB, gNB-CU, gNB-CU-CP) or may perform conversion between the electrical signal and an optical signal through the copper wire. The session management device may be connected to one or more base stations through the transceiver 1110. For example, the transceiver 1110 may transmit a paging message to a corresponding base station.

The transceiver 1110 may perform functions for transmitting and receiving the signal in a wireless communication environment. The transceiver 1110 may support an N1 interface. The session management device may support NAS signaling through the transceiver 1110. The session management device may transmit a NAS message to the UE through the transceiver 1110. For example, the transceiver 1110 may receive a registration request message from the UE. The transceiver 1110 may transmit a registration acceptance message to the UE.

The transceiver 1110 transmits and receives the signal as described above. Accordingly, all or part of the transceiver 1110 may be referred to as a 'communication unit', a 'transmission unit', a 'reception unit', or a 'transmission/reception unit'. In addition, in the following description, transmission and reception performed through a wireless channel are used as meaning including that the above-described processing is performed by the transceiver 1110. Although only the transceiver 1110 is illustrated in FIG.11, according to another embodiment, the session management device may include two or more transceivers.

Although not illustrated in FIG. 11, the transceiver 1110 may further include the transceiver for being connected to another entity (e.g., AMF, UPF, NWDAF) of a core network. The transceiver provides an interface for performing communication with other nodes in the network. In other words, the backhaul transceiver converts a bit string transmitted from the base station to another node, for example, another access node, another base station, an upper node, a core network, and the like into a physical signal, and converts a physical signal received from another node into a bit string.

The memory 1120 stores data such as a basic program, an application program, and setting information, for an operation of an electronic device. The memory 1120 may be referred to as a storage unit. The memory 1120 may be configured with volatile memory, non-volatile memory, or a combination of volatile and non-volatile memory. In addition, the memory 1120 provides the stored data according to the request of the processor 1130.

The processor 1130 controls overall operations of the electronic device. The processor 1130 may be referred to as a control unit. For example, the processor 1130 transmits and receives the signal through the transceiver 1110 (or through a backhaul communication unit). In addition, the processor 1130 records and reads data in the memory 1120. In addition, the processor 1130 may perform functions of the protocol stack required by the communication standard. Although only the processor 1130 is illustrated in FIG. 11, according to another implementation example, the mobility management device 150 may include two or more processors.

The configuration of the electronic device illustrated in FIG. 11 is only an example, and an example of the mobility management device performing embodiments of the present disclosure is not limited from the configuration illustrated in FIG. 11. In some embodiments, some configuration may be added, deleted, or changed.

In embodiments, a method performed by a session management device, comprises obtaining prediction information for a residence time of a user equipment (UE) per a service area of each user plane function (UPF), based on mobility information of the UE. The method comprises identifying a packet data unit (PDU) session anchor (PSA) UPF for the UE based on the prediction information. The method comprises, based on identifying an event according to a movement of the UE, identifying whether a UPF corresponding to the service area in which the UE is located is the PSA UPF for the UE. The method comprises, based on identifying that the UPF is the PSA UPF for the UE, performing a PSA change to the UPF. By reselecting the PSA UPF based on a predicted location, which may be based on the machine learning result, signaling traffic in the control plane may be reduced and service quality may be increased. For example, the session management device comprises a session management function (SMF).

According to an embodiment, the method may comprise, based on identifying that the UPF is not the PSA UPF for the UE, maintaining a PDU Session in a previous UPF corresponding to a previous service area of the UE. By avoiding unnecessary UPF reselection, signaling traffic can be reduced and service quality can be maintained.

According to an embodiment, the performing of the PSA change may comprise performing a procedure to release of a first PDU session with a previous UPF corresponding to a previous service area of the UE. The performing of the PSA change may comprise, after the first PDU session is released, performing a PDU session establishment procedure for a second PDU session with the UPF.

According to an embodiment, the performing of the PSA change may comprise performing a PDU session establishment procedure for a second PDU session with the UPF. The performing of the PSA change may comprise, after the second PDU session is established, performing a procedure to release of a first PDU session with a previous UPF corresponding to a previous service area of the UE. In other words, the inventive concept can be applied to both SSC mode 2 (hard handover) and SSC mode 3 (soft handover).

According to an embodiment, the prediction information may be obtained based on a machine learning with the mobility information of the UE as input data and the prediction information as output data. According to an embodiment, the machine learning may be performed based on a neural network model having a long short-term memory (LSTM) structure. Using machine learning, very accurate prediction information may be obtained, as exemplified with reference to Fig. 9A, 9B. Alternative prediction models may be used, which may be slightly less accurate, but which can be performed using less computational effort, e.g. simple statistical analysis of mobility data.

According to an embodiment, the output data may comprise a single vector for the UE. A position of an element of the single vector may indicate a service area of a UPF, and a value of the element may indicate a residence time of the UE in the indicated service area. In this manner, prediction information can be stored and processed efficiently.

According to an embodiment, the method may comprise identifying one or more tracking areas (TAs) among a plurality of TAs for the UPF, based on mobility information between TAs of the UE. The method may comprise transmitting, to an access and mobility management function (AMF), a request message including information on an area of validity for indicating the one or more TAs. Based on this embodiment, as explained above in more detail with reference to Fig. 2B, a service request procedure can be simplified considerably in certain cases. Further, signaling overhead can be prevented by reducing the number of TAs forming the area of validity.

According to an embodiment, the one or more TAs are identified based on a prediction result for a residence time of the UE per TA. According to an embodiment, the prediction result is obtained using machine learning. As already mentioned in connection with obtaining the general prediction information for the residence time of the UE per service area (SA) of each UPF, alternative methods, different from machine learning, may be used also here in order to obtain the prediction result for the residence time of the UE per TA.

According to an embodiment, the method may comprise identifying whether a PSA is changed during a designated time interval. The method may comprise, in case that the PSA is not changed during the designated time interval, performing a PSA change. Through this embodiment, the length of the transmission path from an edge cloud to the UE may be managed by the SMF. In particular, it can be avoided that the transmission path becomes excessively long.

According to an embodiment, the PSA UPF may be identified based on at least one of a movement speed of the UE, a position of the UE, a session and service continuity (SCC) mode, or a deployment of UPFs. Thus, an optimal PSA UPF can be selected for different settings, respectively.

In embodiments, a device of a session management device, comprises at least one transceiver, and at least one processor coupled to the at least one transceiver. The at least one processor is configured to obtain prediction information for a residence time of a user equipment (UE) per a service area of each user plane function (UPF), based on mobility information of the UE. The at least one processor is configured to identify a packet data unit (PDU) session anchor (PSA) UPF for the UE based on the prediction information. The at least one processor is configured to, based on identifying an event according to a movement of the UE, identify whether a UPF corresponding to the service area in which the UE is located is the PSA UPF for the UE. The at least one processor is configured to, based on identifying that the UPF is the PSA UPF for the UE, perform a PSA change to the UPF. For example, the session management device comprises a session management function (SMF).

According to an embodiment, the at least one processor may be configured to, based on identifying that the UPF is not the PSA UPF for the UE, maintain a PDU Session in a previous UPF corresponding to a previous service area of the UE.

According to an embodiment, the at least one processor may be, to perform the PSA change, configured to perform a procedure to release of a first PDU session with a previous UPF corresponding to a previous service area of the UE. The at least one processor may be, to perform the PSA change, configured to, after the first PDU session is released, perform a PDU session establishment procedure for a second PDU session with the UPF.

According to an embodiment, the at least one processor may be, to perform the PSA change, configured to perform a PDU session establishment procedure for a second PDU session with the UPF. The at least one processor may be, to perform the PSA change, after the second PDU session is established, perform a procedure to release of a first PDU session with a previous UPF corresponding to a previous service area of the UE.

According to an embodiment, the prediction information may be obtained based on a machine learning with the mobility information of the UE as input data and the prediction information as output data. According to an embodiment, the machine learning may be performed based on a neural network model having a long short-term memory (LSTM) structure.

According to an embodiment, the output data may comprise a single vector for the UE. A position of an element of the single vector may indicate a service area of a UPF, and a value of the element may indicate a residence time of the UE in the indicated service area.

According to an embodiment, the at least one processor may be configured to identify one or more tracking areas (TAs) among a plurality of TAs for the UPF, based on mobility information between TAs of the UE. The at least one processor may be configured to transmit, to an access and mobility management function (AMF), a request message including information on an area of validity for indicating the one or more TAs.

According to an embodiment, the one or more TAs may be identified based on a prediction result for a residence time of the UE per TA using a machine learning.

According to an embodiment, the at least one processor may be configured to identify whether a PSA is changed during a designated time interval. The at least one processor may be configured to, in case that the PSA is not changed during the designated time interval, perform a PSA change.

According to an embodiment, the PSA UPF may be identified based on at least one of a movement speed of the UE, a position of the UE, a session and service continuity (SCC) mode, or a deployment of UPFs.

In embodiments, a non-transitory computer-readable medium is provided. The non-transitory computer-readable medium is provisioned with program instructions that, when executed by one or more processors, cause a session management device, to perform functions comprising obtaining prediction information for a residence time of a user equipment, UE, per a service area of each user plane function, UPF, based on mobility information of the UE, identifying a packet data unit, PDU, session anchor, PSA, UPF for the UE based on the prediction information of the UE, based on identifying an event according to a movement of the UE, identifying whether a UPF corresponding to the service area in which the UE is located is the PSA UPF for the UE, based on identifying that the UPF is the PSA UPF for the UE, performing a PSA change to the UPF. For example, the session management device comprises a session management function (SMF).

Methods according to the embodiments described in the claims or the specification of the present disclosure may be implemented in the form of hardware, software, or a combination of hardware and software.

When implemented as software, a non-transitory computer-readable storage medium storing one or more programs (software module) may be provided. The one or more program stored in the computer-readable storage medium is configured for execution by one or more processor in the electronic device. The one or more programs include instructions that cause the electronic device to execute methods according to embodiments described in the claim or the specification of the present disclosure.

Such program (software modules, software) may be stored in random access memory, non-volatile memory including flash memory, read only memory (ROM), electrically erasable programmable read only memory (EEPROM), magnetic disc storage device, compact disc-ROM (CD-ROM), digital versatile disc (DVD) or other form of optical storage, magnetic cassette. Alternatively, it may be stored in a memory configured with some or all combinations thereof. In addition, each configuration memory may be included a plurality.

In addition, the program may be stored in an attachable storage device that may be accessed through a communication network, such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may access a device performing an embodiment of the present disclosure.

In the above-described specific embodiments of the present disclosure, the component included in the disclosure is expressed in singular or plural according to the presented specific embodiment. However, singular or plural expression is chosen appropriately for the situation presented for convenience of explanation, and the present disclosure is not limited to singular or plural component, and even if the component is expressed in plural, it may be configured with singular, or even if it is expressed in singular, it may be configured with plural.

Meanwhile, in the detailed description of the present disclosure, the specific embodiment have been described, but it goes without saying that various modification is possible within the limit not departing from the scope of the present disclosure.

## Claims

1. A method performed by a session management device, the method comprising:
obtaining prediction information for a residence time of a user equipment, UE, per a service area of each user plane function, UPF, based on mobility information of the UE;
identifying a packet data unit, PDU, session anchor, PSA, UPF for the UE based on the prediction information of the UE;
based on identifying an event according to a movement of the UE, identifying whether a UPF corresponding to the service area in which the UE is located is the PSA UPF for the UE;
based on identifying that the UPF is the PSA UPF for the UE, performing a PSA change to the UPF.

2. The method of claim 1, further comprising:
based on identifying that the UPF is not the PSA UPF for the UE, maintaining a PDU Session in a previous UPF corresponding to a previous service area of the UE.

3. The method of claims 1 to 2, wherein the performing of the PSA change comprises:
performing a procedure to release of a first PDU session with a previous UPF corresponding to a previous service area of the UE; and
after the first PDU session is released, performing a PDU session establishment procedure for a second PDU session with the UPF.

4. The method of any one of claims 1 to 3, wherein the performing of the PSA change comprises:
performing a PDU session establishment procedure for a second PDU session with the UPF; and
after the second PDU session is established, performing a procedure to release of a first PDU session with a previous UPF corresponding to a previous service area of the UE.

5. The method of any one of claims 1 to 4,
wherein the prediction information is obtained based on a machine learning with the mobility information of the UE as input data and the prediction information as output data.

6. The method according to claim 5,
wherein the machine learning is performed based on a neural network model having a long short-term memory, LSTM, structure.

7. The method of claims 5 or 6,
wherein the output data comprises a single vector for the UE,
wherein a position of an element of the single vector indicates a service area of a UPF, and
wherein a value of the element indicates a residence time of the UE in the indicated service area.

8. The method of any one of claims 1 to 7, further comprising:
identifying one or more tracking areas, TAs, among a plurality of TAs for the UPF, based on mobility information between TAs of the UE; and
transmitting, to an access and mobility management function, AMF, a request message including information on an area of validity for indicating the one or more TAs.

9. The method of any one of claims 1 to 8, wherein the one or more TAs are identified based on a prediction result for a residence time of the UE per TA using machine learning.

10. The method of any one of claims 1 to 9, further comprising:
identifying whether a PSA is changed during a designated time interval; and
in case that the PSA is not changed during the designated time interval, performing a PSA change.

11. The method of any one of claims 1 to 10, wherein the PSA UPF is identified based on at least one of a movement speed of the UE, a position of the UE, a session and service continuity, SCC, mode, or a deployment of UPFs.

12. A session management device comprising:
at least one transceiver; and
at least one processor coupled to the at least one transceiver, wherein the at least one processor is configured to:
obtain prediction information for a residence time of a user equipment, UE, per a service area of each user plane function, UPF, based on mobility information of the UE;
identify a packet data unit, PDU, session anchor, PSA, UPF for the UE based on the prediction information of the UE;
based on identifying an event according to a movement of the UE, identify whether a UPF corresponding to the service area in which the UE is located is the PSA UPF for the UE; and
based on identifying that the UPF is the PSA UPF for the UE, perform a PSA change to the UPF.

13. The session management device of claim 12, wherein the at least one processor is further configured to:
based on identifying that the UPF is not the PSA UPF for the UE, maintain a PDU Session in a previous UPF corresponding to a previous service area of the UE.

14. The session management device of any one of claims 12 to 13, wherein the at least one processor is configured to carry out the steps of a method according to any of claims 3 to 11.

15. A non-transitory computer-readable medium, wherein the non-transitory computer-readable medium is provisioned with program instructions that, when executed by one or more processors, cause a session management device to perform functions comprising:
obtaining prediction information for a residence time of a user equipment, UE, per a service area of each user plane function, UPF, based on mobility information of the UE;
identifying a packet data unit, PDU, session anchor, PSA, UPF for the UE based on the prediction information of the UE;
based on identifying an event according to a movement of the UE, identifying whether a UPF corresponding to the service area in which the UE is located is the PSA UPF for the UE;
based on identifying that the UPF is the PSA UPF for the UE, performing a PSA change to the UPF.
